# EUROPÄISCHE PATENTSCHRIFT

(11) **EP 3 063 033 B1**
(45) Veröffentlichungstag und Bekanntmachung des Hinweises auf die Patenterteilung: **06.12.2017**
(21) Anmeldenummer: 14786627.1
(22) Anmeldetag: 02.10.2014
(51) Int. Cl.: B60K 28/02

(54) **WARNHINWEIS BEZÜGLICH DER BENUTZUNG VON HEAD-MOUNTED DISPLAYS IM FAHRZEUG**
WARNING MESSAGE WITH RESPECT TO THE USE OF HEAD-MOUNTED DISPLAYS IN A VEHICLE
AVERTISSEMENT CONCERNANT L'UTILISATION DE VISIOCASQUES DANS UN VÉHICULE

(30) Priorität: 28.10.2013 DE 102013221855
(43) Veröffentlichungstag der Anmeldung: 07.09.2016
(73) Patentinhaber: Bayerische Motoren Werke Aktiengesellschaft, 80809 München (DE)
(72) Erfinder: FARID, Mehdi, 80807 München (DE); HABERL, Wolfgang, 81547 München (DE); LAUBER, Felix, 80634 München (DE); SPIESSL, Wolfgang, 85276 Pfaffenhofen (DE)
(86) Internationale Anmeldenummer: PCT/EP2014/071117
(87) Internationale Veröffentlichungsnummer: WO 2015/062805

(56) Entgegenhaltungen:
- DE-A1-102012 201 513
- US-A1- 2013 147 686

## Beschreibung

Die Erfindung betrifft eine Vorrichtung für Kraftfahrzeuge, die dazu dient vor der Benutzung von Datenbrillen im Fahrzeug zu warnen.

Heutzutage sind Datenbrillen, manchmal auch Head-mounted Displays genannt, bekannt, die eine Anzeige umfassen. Eine Datenbrille wird durch einen Benutzer ähnlich einer gewöhnlichen Brille, die als Sehhilfe verwendet wird, auf dem Kopf getragen. Die Anzeige der Datenbrille befindet sich dabei im Sichtfeld des Trägers. Manche Datenbrillen umfassen eine Anzeige für nur ein Auge, andere Datenbrillen umfassen zwei Teilanzeigen, wobei jedem Auge eine Teilanzeige zugeordnet ist.

Weiterhin ist es bekannt, dass Datenbrillen eine halbtransparente Anzeige umfassen können. Eine solche Anzeige ermöglicht es dem Träger sowohl angezeigte Informationen als auch das Umfeld hinter der Anzeige zu erkennen. Diese Art an Anzeige ist besonders gut zur kontaktanalogen Darstellung von Informationen geeignet. Es sind Datenbrillen bekannt geworden, deren Anzeige nicht im zentralen Sichtfeld des Trägers liegt.

Häufig verfügen Datenbrillen über Sende- und Empfangseinheiten zur drahtlosen Datenübertragung. Typischerweise sind dies Bauelemente zur Nutzung von WLAN (manchmal auch WiFi genannt), Bluetooth oder Bauelemente gemäß einem oder mehreren der Mobilfunkstandards 3GPP, LTE oder nachfolgenden Standards.

Unabhängig davon, ob die Anzeige einer Datenbrille im zentralen oder nicht im zentralen Sichtfeld angeordnet ist, stellen die Darstellungen auf der Anzeige der Datenbrille potentiell eine Ablenkung von anderen Tätigkeiten dar. Dies gilt insbesondere dann, wenn der Träger der Datenbrille als Fahrer ein Fahrzeug führt. Hier kann durch unvermittelt auftauchende Mitteilungen oder Grafiken die Aufmerksamkeit des Fahrers von seiner Fahraufgabe abgelenkt werden, was die Verkehrssicherheit gefährdet.

Im Falle einer Anzeige einer Datenbrille, die sich im zentralen Sichtfeld des Fahrers befindet, kann sogar die Sicht des Fahrers auf das Verkehrsgeschehen durch Darstellungen der Datenbrille behindert werden. Dies gefährdet ebenfalls die Verkehrssicherheit.

Um den Fahrer eines Fahrzeugs vor den Risiken des Tragens von Datenbrillen zu warnen, ist es denkbar, Aufkleber im Fahrzeug anzubringen, die vor diesen Risiken warnen. Jedoch ist derzeit die Verbreitung von Datenbrillen unter den Fahrern von Kraftfahrzeugen noch relativ gering, so dass die Warnung für die meisten Fahrer irrelevant wäre und eine optische Störquelle darstellen würde.

Das Dokument US 2013/0147686 A1 offenbart eine Durchsicht-Datenbrille, die es erlaubt nahtlos Inhalte von der Datenbrille zu einer Zielrechenvorrichtung zu verschieben. Beispielsweise kann der Benutzer einen Film, der auf der Datenbrille läuft, von einem Fernseher anzeigen lassen, ohne den Filmfluss wesentlich zu unterbrechen.

Die Aufgabe, die der Erfindung zugrunde liegt, ist es somit, nur dann, wenn tatsächlich die Gefahr besteht, dass der Fahrer eines Fahrzeugs eine Datenbrille tragen könnte, vor der Benutzung der Datenbrille zu warnen.

Die Aufgabe wird durch eine Vorrichtung für ein Fahrzeug und ein Fahrzeug gemäß den unabhängigen Patentansprüchen gelöst. Vorteilhafte Weiterentwicklungen sind in den abhängigen Ansprüchen definiert.

In einem Aspekt umfasst eine Vorrichtung für ein Fahrzeug: Eine Sende- und Empfangseinheit zur drahtlosen Datenübertragung; Eine elektronische Recheneinheit, die mit der Sende- und Empfangseinheit operativ gekoppelt ist; Wobei die Vorrichtung zu Folgendem eingerichtet ist: Empfangen von Funksignalen von einer Datenbrille mithilfe der Sende- und Empfangseinheit, von der vorhergehend keine Signale empfangen wurden; Erkennen, dass die Datenbrille in Bezug zum Fahrzeug gebracht wird, umfassend: Erkennen eines zeitlichen Zusammenhangs zwischen einer Bedienung des Fahrzeugs und dem Empfangen von Funksignalen der Datenbrille; wobei die Bedienung des Fahrzeugs insbesondere die Entriegelung des Fahrzeugs, die Bewegung von Fenstern des Fahrzeugs, die Öffnung einer Tür des Fahrzeugs oder die Betätigung von Bedienelementen des Fahrzeugs umfasst; In Antwort auf das Erkennen des Bezugs: Ausführen einer vorbestimmten Funktion. Optional kann das Verfahren auch explizit das Erkennen, dass es sich um Funksignale von einer Datenbrille handelt, umfassen. Die Sende- und Empfangseinheit kann ein WLAN Modul sein, insbesondere ein Hotspot, ein Bluetooth-Modul oder eine Station für mobile Datenübertragung gemäß dem 3GPP, LTE oder nachfolgenden Standards. Die Datenbrille verfügt über entsprechende Mittel zur drahtlosen Datenübertragung.

Es wird somit ermöglicht, den Fahrer eines Fahrzeugs nur dann vor den Gefahren der Benutzung der Datenbrille zu warnen, wenn tatsächlich eine Datenbrille verwendet werden könnte. Die Identifikation von Situationen, in denen eine Datenbrille im Fahrzeug verwendet werden könnte, geschieht über den zeitlichen Zusammenhang zwischen einer Bedienung des Fahrzeugs und dem erstmaligen bzw. nach einem Nicht-Empfang wieder auftretendem Empfang von Signalen von der Datenbrille. Treten beide Ereignisse gleichzeitig oder um einen akzeptablen Zeitversatz nacheinander auf (kleiner als ein Schwellwert, beispielsweise 10s oder 2 min), so besteht eine hohe Wahrscheinlichkeit, dass die Datenbrille von dem Fahrer oder einem anderen Passagier des Fahrzeugs mitgeführt wird und derart in die Nähe des Fahrzeugs gebracht wird, dass eine Funkverbindung aufgebaut werden kann. In einer solchen Situation erscheint beispielsweise die Ausgabe eines Warnhinweises (ein Beispiel für eine Funktion) angebracht. Besteht andererseits kein Anlass anzunehmen, dass eine Datenbrille in das Fahrzeug verbracht wird, so erscheint auch die Ausgabe eines Warnhinweises nicht nötig und würde den Fahrer stören.

In einer Weiterbildung umfasst das Empfangen von Funksignalen: Erkennen einer Angabe in den Funksignalen, die anzeigt, dass die Funksignale von einer Datenbrille stammen; wobei die Angabe in den Funksignalen insbesondere einem Funkprotokoll entspricht.

Die Erkennung bzw. Feststellung, dass es sich bei den Funksignalen um Funksignale von einer Datenbrille handelt, kann anhand einer Adresse (beispielsweise einer MAC Adresse einer WLAN-Einheit) der Sende- und Empfangseinheit der Datenbrille und einer Zuordnung der Adresse zu einem Produkt oder Hersteller oder zu einer Geräteklasse anhand einer Liste, die eine Verknüpfung zwischen Adressen und Produkten, Herstellern oder Geräteklassen bereitstellt, geschehen. Es kann auch vorgesehen sein, anhand einer Angabe zur Geräteklasse, die in dem verwendeten Übertragungsprotokoll vorgesehen ist, oder die auf Anfrage von der erfindungsgemäßen Vorrichtung von der Datenbrille mitgeteilt wird, die Feststellung zu treffen, dass es sich um eine Datenbrille handelt.

In einer bevorzugten Weiterbildung umfasst das Erkennen, dass die Datenbrille in Bezug zum Fahrzeug gebracht wird: Bestimmen der Entfernung und/oder Position der Datenbrille in Bezug auf das Fahrzeug mithilfe der Signalstärke der Funksignale durch die Sende- und Empfangseinheit; wobei die Sende- und Empfangseinheit insbesondere mehrere Antennen an unterschiedlichen Positionen umfasst, mit deren Hilfe sich die Signalstärke und/oder die Herkunftsrichtung der Funksignale bestimmen lässt. Es wird somit eine Ortung bzw. nur eine Entfernungsbestimmung anhand der Signalstärke der Datenbrille vorgeschlagen. Diese Informationen werden berücksichtigt, um die Nähe der Datenbrille zum Fahrzeug zu erkennen. Gegebenenfalls kann auch erkannt werden, in welche Richtung sich die Datenbrille bewegt, ob sie sich zum Fahrzeug hin bewegt oder vom Fahrzeug weg bewegt. Dies sind weitere Indizien dafür, dass der Fahrer des Fahrzeugs die Datenbrille mit sich trägt.
In einer Weiterbildung umfasst die Funktion: Veranlassen der Ausgabe eines Hinweises durch eine Ausgabevorrichtung, insbesondere durch eine Anzeige und/oder Lautsprecher; Empfangen von Informationen über eine Eingabe durch einen Benutzer in eine Eingabevorrichtung; Empfangen einer Eingabe als Antwort auf den Hinweis; Prüfen, ob die Eingabe eine vorbestimmte Bedingung erfüllt; Solange die Eingabe die vorbestimmte Bedingung nicht erfüllt: Verhindern einer weiteren Funktion, insbesondere Verhindern von bestimmten Typen von Datenübertragungen von dem Fahrzeug zur Datenbrille oder Verhindern des Starts der Kraftmaschine des Fahrzeugs. Wenn also festgestellt wurde, dass der Benutzer eine Datenbrille in das Fahrzeug verbringt, kann diesem ein Warnhinweis gegeben werden und der Fahrer aufgefordert werden, die Datenbrille nicht zu benutzen. Dieser Warnhinweis kann mit einer Abfrage einhergehen, in der der Fahrer bestätigt, die Datenbrille nicht zu tragen. Erst daraufhin kann beispielsweise die Übertragung von Unterhaltungsdaten wie Videos oder Aktualitätendiensten aus dem Internet über die Sende- und Empfangseinrichtung der erfindungsgemäßen Vorrichtung, die im Fahrzeug verbaut ist, zugelassen werden. Dies soll verhindern, dass der Fahrer die Datenbrille trägt und ermöglicht gleichzeitig die Benutzung der Datenbrille durch andere Passagiere des Fahrzeugs. Ebenso kann vorgesehen sein, den Start der Kraftmaschine des Fahrzeugs von der Bestätigung abhängig zu machen, dass der Fahrer die Datenbrille nicht trägt.
In einer bevorzugten Weiterbildung umfasst die Eingabe das Verbringen der Datenbrille in den Sendebereich einer Nahbereichskommunikation, manchmal auch near-field communication bzw. NFC genannt. Dabei umfasst die Datenbrille einen Bauelement zur NFC Kommunikation mit einem entsprechenden Gegenelement (einem NFC Chip) im Fahrzeug. Eine Kommunikation zwischen den beiden NFC Bausteinen findet nur statt, wenn der NFC Chip der Datenbrille ausreichend nah an dem NFC Baustein des Fahrzeugs ist, beispielsweise näher als 10 cm. Nun ist es möglich, den NFC Chip des Fahrzeugs an einer Stelle im Fahrzeuginnenraum anzuordnen, der nur von den Sitzplätzen für Mitfahrer (bequem) erreicht werden kann und nicht von dem Fahrersitz. Durch das Halten der Datenbrille an den NFC Chip des Fahrzeugs wird bestätigt, dass die Datenbrille von einem Mitfahrer benutzt wird und die Datenübertragung von Unterhaltungsdaten zu dieser Datenbrille kann freigeschaltet werden.

### KURZE BESCHREIBUNG DER ZEICHNUNGEN

Fig. 1 zeigt schematisch eine typische Situation, in der die erfindungsgemäße Vorrichtung zum Einsatz kommt.
Fig. 2 zeigt schematisch ein Ablaufdiagramm von Signalübertragungen zur erfindungsgemäßen Vorrichtung gemäß einem Ausführungsbeispiel.

### DETAILLIERTE BESCHREIBUNG DER AUSFÜHRUNGSBEISPIELE

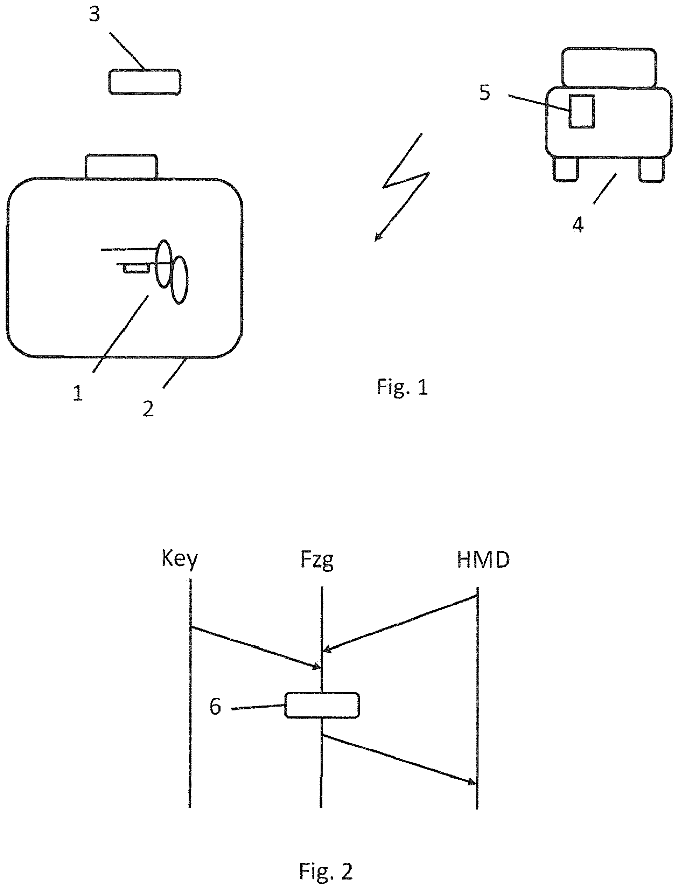

Fig. 1 zeigt schematisch eine typische Situation, in der die erfindungsgemäße Vorrichtung zum Einsatz kommt. Ein zukünftiger Fahrer (nicht gezeigt) des Fahrzeugs 4 nähert sich dem Fahrzeug 4 und führt dabei eine Tasche 2 mit einer sich darin befindlichen Datenbrille 1 mit. Ebenso führt der Fahrer den Funkschlüssel 3 des Fahrzeugs 4 mit sich. Während der Annäherung an das Fahrzeug 4 betätigt der Fahrer den Funkschlüssel 3 und entriegelt damit das Fahrzeug 4. Das Fahrzeug 4 verfügt über eine Sende- und Empfangseinheit 5 für Bluetooth. Ebenso verfügt die Datenbrille 1 über eine Sende- und Empfangseinheit für Bluetooth. Während der Annäherung des Fahrers an das Fahrzeug 4 stellen diese beiden Sende- und Empfangseinheiten eine Funkverbindung her, in der sich die Datenbrille 1 und das Fahrzeug 4 identifizieren. In manchen Implementierungen sendet das Fahrzeug 4 eine explizite Anfrage an die Datenbrille 1, sich zu identifizieren bzw. die Geräteklasse anzugeben. Dies kann insbesondere dann vorgesehen sein, wenn das Verbindungsprotokoll an sich oder die Adresse der Datenbrille keine Identifikation der Geräteklasse oder ähnliches vorsieht oder ermöglicht.

Die Datenbrille 1 und das Fahrzeug 4 haben also bereits Funkkontakt aufgenommen bevor sich die Datenbrille 1 im Fahrzeug 4 befindet. Die Aufnahme dieses Funkkontakts geschieht im vorliegenden Beispiel sogar einige Sekunden bevor das Fahrzeug 4 mit dem Schlüssel 3 entriegelt wird. Das Fahrzeug 4 zeichnet die Zeitpunkte auf, zu denen der Entriegelungsbefehl des Schlüssels 3 empfangen wurde und die Funkverbindung zur Datenbrille 1 aufgebaut wurde. Liegen beide Zeitpunkte weniger als 5s, oder beispielsweise auch weniger als 1 min, auseinander, so wird ein Bezug der Datenbrille 1 zum Fahrzeug 4 festgestellt. In der Folge wird dem Fahrer auf einer Anzeige des Fahrzeugs 4 ein Warnhinweis angezeigt, dass Datenbrillen nicht vom Fahrer während der Fahrt getragen werden dürfen und dass eine Datenverbindung für Unterhaltungsdaten, die das Fahrzeug anbietet, erst dann aufgebaut wird, wenn der Fahrer die Nichtbenutzung der Datenbrille bestätigt. Bestätigt nun der Fahrer die Nichtbenutzung der Datenbrille wird die Datenverbindung für Unterhaltungsdaten zugelassen. Andernfalls wird die Übertragung von Unterhaltungsdaten unterdrückt.

Fig. 2 zeigt schematisch den zeitlichen Ablauf der Funkübertragungen zwischen Fahrzeugschlüssel "Key", dem Fahrzeug "Fzg" und der Datenbrille "HMD" bei einer Annäherung des Fahrers an das Fahrzeug. Zunächst baut sich die Funkverbindung mit der Datenbrille auf, woraufhin kurz danach der Entriegelungsbefehl des Schlüssels empfangen wird. Das Fahrzeug zeigt im Schritt 6 den Warnhinweis an, der vom Fahrer bestätigt wird, so dass eine Datenübertragung für Unterhaltungsinformationen zur Datenbrille zugelassen wird. Die Bestätigung des Fahrers erfolgt über eine Eingabe an Bedienelementen des Fahrzeugs. Ebenfalls denkbar ist allerdings auch, dass die Bestätigung nicht durch den Fahrer des Fahrzeugs getätigt wird, sondern dadurch, dass die Datenbrille an einen NFC Chip in der Nähe eines der Sitzplätze für Mitfahrer gehalten wird. Dies wird ebenfalls als Bestätigung erkannt und die Datenübertragung kann freigeschaltet werden.

## Patentansprüche

1. Vorrichtung für ein Fahrzeug, umfassend:
Eine Sende- und Empfangseinheit zur drahtlosen Datenübertragung;
Eine elektronische Recheneinheit, die mit der Sende- und Empfangseinheit operativ gekoppelt ist; wobei die Vorrichtung zu Folgendem eingerichtet ist:
Empfangen von Funksignalen von einer Datenbrille mithilfe der Sende- und Empfangseinheit, von der vorhergehend keine Signale empfangen wurden;
Erkennen, dass die Datenbrille in Bezug zum Fahrzeug gebracht wird, umfassend:
Erkennen eines zeitlichen Zusammenhangs zwischen einer Bedienung des Fahrzeugs und dem Empfangen von Funksignalen der Datenbrille;
wobei die Bedienung des Fahrzeugs insbesondere die Entriegelung des Fahrzeugs, die Bewegung von Fenstern des Fahrzeugs, die Öffnung einer Tür des Fahrzeugs oder die Betätigung von Bedienelementen des Fahrzeugs umfasst;
In Antwort auf das Erkennen des Bezugs: Ausführen einer vorbestimmten Funktion.

2. Vorrichtung nach einem der vorhergehenden Ansprüche, wobei das Empfangen von Funksignalen, umfasst:
Erkennen einer Angabe in den Funksignalen, die anzeigt, dass die Funksignale von einer Datenbrille stammen; wobei die Angabe in den Funksignalen insbesondere den Vorgaben eines Funkprotokolls entspricht.

3. Vorrichtung nach einem der vorhergehenden Ansprüche wobei das Erkennen, dass die Datenbrille in Bezug zum Fahrzeug gebracht wird, umfasst:
Bestimmen der Entfernung und/oder Position der Datenbrille in Bezug auf das Fahrzeug mithilfe der Signalstärke der Funksignale durch die Sende-und Empfangseinheit; wobei die Sende- und Empfangseinheit insbesondere mehrere Antennen an unterschiedlichen Positionen umfasst, mit deren Hilfe sich die Signalstärke und/oder die Herkunftsrichtung der Funksignale bestimmen lässt.

4. Vorrichtung nach einem der vorhergehenden Ansprüche, wobei die Funktion umfasst:
Veranlassen der Ausgabe eines Hinweises durch eine Ausgabevorrichtung, insbesondere durch eine Anzeige und/oder Lautsprecher;
Empfangen von Informationen über eine Eingabe durch einen Benutzer in eine Eingabevorrichtung;
Empfangen einer Eingabe als Antwort auf den Hinweis;
Prüfen, ob die Eingabe eine vorbestimmte Bedingung erfüllt;
Solange die Eingabe die vorbestimmte Bedingung nicht erfüllt: Verhindern einer weiteren Funktion, insbesondere Verhindern von bestimmten Typen von Datenübertragungen von dem Fahrzeug zur Datenbrille oder Verhindern des Starts der Kraftmaschine des Fahrzeugs.

5. Vorrichtung nach Anspruch 4, wobei die Eingabe das Verbringen der Datenbrille in den Sendebereich einer Nahbereichskommunikation umfasst, wobei die Eingabevorrichtung ein Bauelement der Nahbereichskommunikation ist.

6. Kraftfahrzeug, umfassend eine Vorrichtung nach einem der vorhergehenden Ansprüche.

## Claims

1. A device for a vehicle, comprising:
a transmitting and receiving unit for wireless data transmission;
an electronic computing unit, which is operatively coupled to the transmitting and receiving unit,
wherein the device is designed for the following:
receiving radio signals from data glasses with the aid of the transmitting and receiving unit, with no signals having been received previously from the data glasses;
detecting that the data glasses have been moved relative to the vehicle, comprising:
detecting a temporal relationship between an operation of the vehicle and the receipt of radio signals of the data glasses;
wherein the operation of the vehicle comprises more especially the unlocking of the vehicle, the movement of windows of the vehicle, the opening of a door of the vehicle, or the actuation of operating elements of the vehicle;
in response to the detection of the relative movement: performing a predetermined function.

2. A device according to the preceding claim, wherein the receipt of radio signals comprises:
detecting information in the radio signals that indicates that the radio signals originate from data glasses; wherein the information in the radio signals corresponds more especially to the specifications of a radio protocol.

3. A device according to either one of the preceding claims, wherein the detection that the data glasses have been moved relative to the vehicle comprises:
determining the removal and/or positioning of the data glasses relative to the vehicle with the aid of the signal strength of the radio signals by the transmitting and receiving unit; wherein the transmitting and receiving unit more especially comprises a plurality of antennas at different positions, with the aid of which the signal strength and/or the direction of origin of the radio signals can be determined.

4. A device according to any one of the preceding claims, wherein the function comprises:
prompting the output of a message by an output device, more especially by a display and/or loudspeaker;
receiving information relating to an input by a user in an input device; receiving an input as response to the message;
checking whether the input meets a predetermined condition;
if the input does not meet the predetermined condition: inhibiting a further function, more especially inhibiting specific types of data transmissions from the vehicle to the data glasses or inhibiting the starting of the engine of the vehicle.

5. A device according to claim 4, wherein the input comprises the bringing of the data glasses into the transmission range of a near-field communication, wherein the input device is a component of the near-field communication.

6. A motor vehicle comprising a device according to any one of the preceding claims.

## Revendications

1. Dispositif pour un véhicule comprenant :
- une unité d'émission et de réception pour la transmission sans fil de données,
- une unité de calcul électronique couplée de façon à coopérer avec l'unité d'émission et de réception,
le dispositif étant conçu comme suit pour :
- recevoir des signaux radio d'une lunette connectée à l'aide de l'unité d'émission et de réception d'où au préalable aucun signal n'a été reçu,
- reconnaître que la lunette connectée a été mise en relation avec le véhicule pour :
* reconnaître la relation temporelle entre la gestion du véhicule et la réception de signaux radio de la lunette connectée,
* gérer le véhicule, notamment le déverrouillage du véhicule, le mouvement d'ouverture des vitres du véhicule, l'ouverture d'une portière du véhicule ou l'actionnement d'éléments de manoeuvre du véhicule,
- exécuter une fonction prédéfinie en réponse à la détection de la relation.

2. Dispositif selon la revendication précédente, la réception de signaux radio comprenant :
- la reconnaissance d'une indication dans les signaux radio indiquant que les signaux fonctionnels proviennent d'une lunette connectée, l'indication dans les signaux fonctionnels correspondant notamment à des consignes d'un protocole radio.

3. Dispositif selon l'une des revendications précédentes selon lequel la détection consistant à reconnaître que la lunette connectée a été mise en relation avec le véhicule consiste à :
- déterminer l'éloignement ou la position de la lunette connectée par rapport au véhicule en fonction de l'intensité des signaux radio avec l'unité d'émission et de réception,
- l'unité d'émission et de réception ayant notamment plusieurs antennes dans des positions différentes permettant de déterminer l'intensité du signal et/ou la direction d'origine des signaux radio.

4. Dispositif selon l'une des revendications précédentes,
la fonction consistant à :
- émettre une indication par le dispositif d'émission, notamment par un affichage et/ou un haut-parleur,
- recevoir des informations concernant une entrée dans un dispositif d'entrée par l'utilisateur,
- recevoir une entrée comme réponse à l'indication,
- vérifier si l'entrée répond une condition prédéfinie,
- aussi longtemps que l'entrée ne répond pas à la condition prédéfinie : interdire toute autre fonction, notamment interdire certains types de transmission de données du véhicule vers la lunette connectée ou bloquer le démarrage du moteur du véhicule.

5. Dispositif selon la revendication 4, selon lequel l'entrée consiste à mettre la lunette connectée dans la zone d'émission d'une zone de communication proche, le dispositif d'entrée étant un composant de la communication dans le domaine proche.

6. Véhicule comportant un dispositif selon l'une des revendications précédentes.
